# EUROPEAN PATENT APPLICATION

(11) **EP 2 669 652 A1**
(43) Date of publication of application: **04.12.2013**
(21) Application number: 12169983.9
(22) Date of filing: 30.05.2012
(51) Int. Cl.: G01N 3/30, G01N 3/303, G01M 7/08

(54) **Automatic drop tester**

(71) Applicant: BillerudKorsnäs AB, 169 27 Solna (SE)
(72) Inventor: Almkvist, Jonas, 952 34 Kalix (SE); Lehto, Mattias, 977 55 Luleå (SE); Åström, Peter, 955 31 Råneå (SE); Olovsson, Magnus, 952 92 Kalix (SE); Zakrisson, Robert, 952 51 Kalix (SE)
(74) Representative: Kransell & Wennborg KB

(57) **Abstract**

There is provided a drop tester for a filled sack, comprising a substantially vertical linear drive unit having a sleigh movable in the direction of the extension of the linear drive unit, a platform for receiving the filled sack attached to the sleigh such that the platform may be moved in a substantially vertical direction, a fundament arranged under the platform such that the platform may be positioned on or just above the fundament, and a motor system connected to the sleigh, said motor system being capable of accelerating the platform above 1 g downwards. There is also provided method of drop-testing a filled sack, comprising the steps of: providing the sack on a platform in an upper position; accelerating the platform downwards above 1 g such that the sack is allowed to fall freely from the upper position; and stopping the platform in a lower position on or just above a fundament such that the falling sack hits the platform in the lower position and the impact of the hit is absorbed by the fundament.

## Description

### Technical field

The present invention relates to the field of testing sacks, such as paper sacks filled with cement powder. In particular, it relates to an apparatus for making drop tests.

### Background

Various powdery or granularly materials, such as cement and other building materials, chemicals, garden fertilizers, food, animal feed and pet food are packed, distributed and sold in sacks. Normally, the sacks are made of one or several paper plies. During handling, it is important that the filled sacks are not easily broken. Therefore, there is a need for equipment for testing the strength of filled sacks under standardized conditions. With such equipment at hand, the development of improved sack solutions may be facilitated.

Preferably, such equipment is compatible with the ISO standard for drop tests (ISO 7965/1-1984).

### Summary

It is thus an object of the present disclosure to provide a drop tester and a drop testing method that provides for reliable and convenient testing of the strength of filled sacks.

To meet the above object, there is provided a drop tester for a filled sack, comprising a substantially vertical linear drive unit having a sleigh movable in the direction of the extension of the linear drive unit, a platform for receiving the filled sack attached to the sleigh such that the platform may be moved in a substantially vertical direction, a fundament arranged under the platform such that the platform may be positioned on or just above the fundament, and a motor system connected to the sleigh, said motor system being capable of accelerating the platform above 1 g downwards.

Further, there is provided method of drop-testing a filled sack, comprising the steps of: providing the sack on a platform in an upper position; accelerating the platform downwards above 1 g such that the sack is allowed to fall freely from the upper position; and stopping the platform in a lower position on or just above a fundament such that the falling sack hits the platform in the lower position and the impact of the hit is absorbed by the fundament.

The present invention entails a number of benefits. Firstly, the sack is allowed to fall without having any forces from the side acting on it. Thus, any rotational movements of the sack are prevented which provides for a more reliable testing result. For example, the sack will land flat and not slightly tilted. Secondly, the same apparatus lifts and drops the sack. Thus, the sack may be positioned in the apparatus at a height convenient for the operator of the test. With prior art technology, the operator sometimes had to climb a ladder with a sack weighing up to 50 kg. Thirdly, the sack lands on the same platform as it falls from. Thus, no repositioning of the sack between repeated testing of the same sack is needed, which saves labor and improves the working environment.

### Brief description of the figures

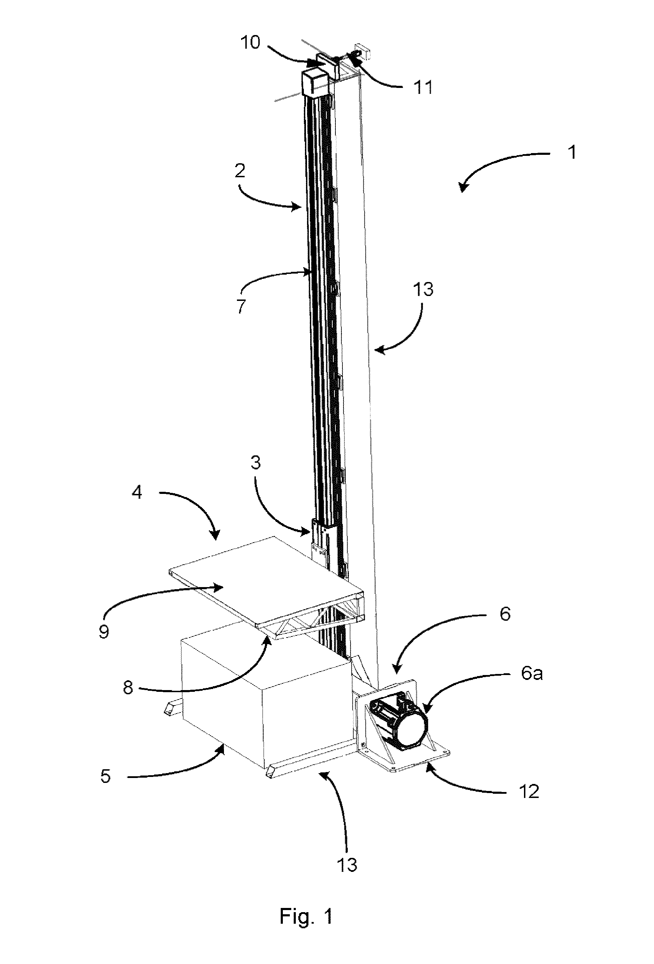

Figure 1 illustrates an embodiment of a drop tester according to the present disclosure.

### Detailed description

In a first aspect of the present disclosure, there is thus provided a drop tester for a filled sack, comprising a substantially vertical linear drive unit having a sleigh movable in the direction of the extension of the linear drive unit, a platform for receiving the filled sack attached to the sleigh such that the platform may be moved in a substantially vertical direction, a fundament arranged under the platform such that the platform may be positioned on or just above the fundament, and a motor system connected to the sleigh, said motor system being capable of accelerating the platform above 1 g downwards.

In one embodiment, the motor system has an axis that is connected to the sleigh by means of a belt. Thus, the rotation of the axis may move the sleigh and thus the platform.

The platform may for example comprise a frame having an upper side defining a substantially horizontal plane and a receiving portion arranged on said upper side for receiving the sack. The receiving portion thus provides the surface onto which the sack is placed.

The motor system of the present disclosure is preferably a servo motor system, which may comprise four main parts. The first part is the motor itself, i.e. a servo motor, and the second part is a servo amplifier that controls the motor and feeds electricity to it. The third part is a rotary encoder which, during use, constantly feeds the servo amplifier with position data of the motor. This data is then converted to speed, acceleration etc. by the servo amplifier. The fourth part is a brake resistor. When the servo motor is used for decelerating a movement it will generate electrical energy instead of consuming it and the brake resistor will convert the generated electrical energy into heat.

A software for controlling the motion of the motor may be implemented in the servo amplifier. Several motion paths may be programmed and stored on a hardware in the servo amplifier. The paths may be programmed by connecting an external computer to the servo amplifier or by using an interface, such as a display and/or buttons, on the servo amplifier.

In a second aspect of the present disclosure, there is provided a method of drop-testing a filled sack, comprising the steps of:
a) providing the sack on a platform in an upper position;
b) accelerating the platform downwards above 1 g such that the sack is allowed to fall freely from the upper position; and
c) stopping the platform in a lower position on or just above a fundament such that the falling sack hits the platform in the lower position and the impact of the hit is absorbed by the fundament.

Steps a)-c) may be repeated two or more times. Between two a)-c) series, the upper position may be raised such that the sack falls from a greater height during the next test.

In an embodiment, step a) of the method comprises arranging/placing the sack on the platform in the lower position and raising the platform to the upper position such that the sack is provided on the platform in the upper position. However, this arranging/placing is normally not needed between two tests of the same sack as explained above.

The platform may be accelerated downwards above 2 g, such as above 2.5 g, in step b).

In an preferred embodiment of the method, the sack is a paper sack, such as a two- or three-ply paper sack. However, plastic sacks having one or more plies may also be tested with the method of the present disclosure. Typically, the sack is filled with cement or concrete powder. However, it may also be filled with another type of powdered goods, such as soil or flour or any of the other materials mentioned in the background section.

In an embodiment, the upper position is 20-500 cm, such as 30-500 cm, 50-500 cm or 75-400 cm, above the lower position.

The above embodiments of the first aspect apply *mutatis mutandis* to the second aspect and the above embodiments of the second aspect apply *mutatis mutandis* to the first aspect.

### Exemplary embodiment

With reference to figure 1, a non-limiting embodiment of the present invention is described below.

The drop tester 1 has a linear drive unit 2 arranged vertically. An example of a liner drive unit that may be used is WH120 marketed by Thomson. The linear drive unit 2 is preferably connected to a framework 13, such as a beam. The height of the linear drive unit is preferably at least 2 meters to allow for sufficiently high drops during the testing. For example, the height may be 3-6 meters, such as 4-5 meters. Attachment means 11 may attach the linear drive unit 2 or the framework 13 to a wall. Preferably, the top end 10 of the framework 13 is connected to the attachment means 11. The linear drive unit 2 comprises a sleigh 3 that is movable along the direction of the extension of the linear drive unit 2. Thus, the sleigh 3 is movable in the vertical direction. A platform 4 is attached to the sleigh 3. Consequently, the platform 4 is also movable in the vertical direction. The platform 4 may comprise a frame 8 that is connected to the sleigh 3. An upper side of the frame 8 may be designed to define a substantially horizontal plane, and a receiving portion 9 for receiving the sack to be tested may be arranged on the upper side. The receiving portion 9 may for example be a board, a net or a cloth. The area of the receiving portion 9 is preferably of a size such that a 50 kg cement sack may be placed and retained on the platform 4. For example, the depth of the receiving portion 9 may be at least 500 mm, such as 600-900 mm, and the width may be at least 700 mm, such as 800-1100 mm.

In the linear drive unit 2, the sleigh 3 runs along a rail. The movement of the sleigh 3 (and thus the platform 4) is preferably driven by a belt 7, such as a cogged rubber belt. At the ends of the linear drive unit 2, toothed wheels may be arranged for the belt 7 to run on.

A motor system 6 is provided for moving the sleigh 3 via the belt 7. For example, a shaft of the motor system 6 may be connected to the toothed wheel of the lower end of the linear drive unit 2. The motor system 6 and the belt 7 are capable of moving the platform 4 from a lower position, in which a sack may be arranged on the receiving portion 9, to an upper position, from which the sack may be dropped and thus tested. Thus, the motor system 6 preferably has sufficient power for lifting a 50 kg sack. Further, the motor system 6 and the belt 7 are capable of accelerating the platform 4 downwards from the upper position faster then the acceleration of the free falling sack. That is, the acceleration of the platform 4 is greater than 1 g. To achieve a proper impact on the sack when it hits the platform 4 after falling, the platform 4 should be stopped at a lower position, normally the initial loading position. An acceleration of the platform 4 of at least 2 g, such as about 3 g, from the upper position may be necessary to allow sufficient time for a subsequent deceleration to a complete stop before the hit.

In the lower position, where the falling sack hits the platform 4, the platform 4 rests on a fundament 5 such that the impact of the hit is absorbed by the fundament 5. Alternatively, the platform 4 is stopped just above (within 1 cm of) the upper side of the fundament 5 and the receiving portion 9 is composed of a flexible and/or extensible material such that the forces of the hit still affects the fundament instead of the frame 8 and the sleigh 3 and thus the linear drive unit 2. The fundament 5 preferably has a horizontal upper surface that is adapted to contact the under side of the receiving portion 9. Thus, the area of upper surface of the fundament 5 may be substantially the same or slightly smaller than the area of the receiving portion 9. Thus, the depth of the upper surface of the fundament 5 may be at least 450 mm, such as 550-850 mm, and the width may be at least 650 mm, such as 750-1050 mm.

The motor system 6 comprises a motor 6a, which preferably is arranged in a socket 12 attaching it to the floor. The socket 12 may also align the motor 6a with the axis of the toothed wheel and/or be attached to the framework 13. The motor may for example be AKM82T marketed by Kollmorgen. The motor 6a may be connected to a servo amplifier (not shown), e.g. S748 marketed by Kollmorgen.

## Claims

1. A drop tester (1) for a filled sack, comprising a substantially vertical linear drive unit (2) having a sleigh (3) movable in the direction of the extension of the linear drive unit, a platform (4) for receiving the filled sack attached to the sleigh such that the platform may be moved in a substantially vertical direction, a fundament (5) arranged under the platform such that the platform may be positioned on or just above the fundament, and a motor system (6) connected to the sleigh, said motor system being capable of accelerating the platform above 1 g downwards.

2. The drop tester (1) according to claim 1, wherein the motor system (6) has a rotatable axis that is connected to the sleigh (3) by means of a belt (7).

3. The drop tester (1) according to claim 1 or 2, wherein the platform (4) comprises a frame (8) having an upper side defining a substantially horizontal plane and a receiving portion (9) arranged on said upper side for receiving the sack.

4. The drop tester (1) according to any one of the preceding claims,
wherein the motor system (6) comprises a servo motor (6a) connected to a servo amplifier controlling the servo motor.

5. The drop tester (1) according to claim 4, wherein the motor system (6) further comprises a rotary encoder arranged to feed the servo amplifier with data.

6. The drop tester (1) according to any one of the preceding claims,
wherein the motor system comprises a brake resistor.

7. A method of drop-testing a filled sack, comprising the steps of:
a) providing the sack on a platform (6) in an upper position;
b) accelerating the platform downwards above 1 g such that the sack is allowed to fall freely from the upper position; and
c) stopping the platform in a lower position on or just above a fundament (5) such that the falling sack hits the platform in the lower position and the impact of the hit is absorbed by the fundament.

8. The method according to claim 7, wherein step a) comprises arranging the sack on the platform (4) in the lower position and raising the platform to the upper position such that the sack is provided on the platform in the upper position.

9. The method according to claim 7 or 8, wherein the platform (4) is
accelerated downwards above 2 g in step b).

10. The method according to any one of claims 7-9, wherein the sack is a
paper sack, such as a two- or three-ply paper sack.

11. The method according to any one of claims 7-10, wherein the sack is
filled with cement or concrete powder.

12. The method according to any one of claims 7-11, wherein the upper
position is 20-500 cm above the lower position.

13. The method according to claim 12, wherein the upper position is 50-500 cm above the lower position.
